# EUROPEAN PATENT APPLICATION

(11) **EP 1 693 346 A2**
(43) Date of publication of application: **23.08.2006**
(21) Application number: 05466021.2
(22) Date of filing: 19.12.2005
(51) Int. Cl.: C02F 11/06, C02F 3/26

(54) **Method and device for sewage sludge treatment**

(30) Priority: 20.12.2004 CZ 20041225
(71) Applicant: Fortex - AGS, a.s., 787 92 Sumperk (CZ); Loskotova, Jarmila, 155 00 Praha 5 (CZ)
(72) Inventor: Foller, Jan, 664 49 Ostopovice (CZ); Jelinek, Jiri, 664 41 Troubsko (CZ)
(74) Representative: Loskotova, Jarmila

(57) **Abstract**

The device enables traditional aerobic stabilization by air and thickening and self-heating aerobic thermophilic stabilization and sanitation of sewage sludge from sewage water plants with pure oxygen to be performed in a single technological complex, with the possibility of biological degree revitalization - activating tanks in water treatment plants by seeding by means of various operation modes selectable from a control panel.

## Description

### Field of technology

The invention deals with sewage sludge treatment for further use in agriculture.

### The Present State of Technology

Sewage sludge from water treatment plants has to be stabilized and sanitized for further use, for example in agriculture, i.e. it has to meet particular criteria that the processors have to observe.

There are numerous methods and devices for stabilization and sanitation of sewage sludge.
Sewage sludge stabilization and sanitation may proceed simultaneously or separately in the same device or in different devices.
There are efforts to exploit sanitation effect of sewage sludge processing technologies in practice. However not all sewage sludge treatment methods and not all conditions give a product of required quality.
Self-heating aerobic thermophilic stabilization with pure oxygen is one of the proper methods for obtaining stabilized sewage sludge with required sanitation. This procedure ensures self-heating of sludge in a reactor up to the sanitation temperature by forcing in pure oxygen, reaching and maintaining hygienic quality of sludge while reducing operation costs compared to other methods. By the existing experience this method has not been reliably ensuring the required hygienic qualities of the final product, and moreover the ability to drain the produced sludge after performing stabilization and sanitation has decreased in most instances and caused substantial problems in handling the final sludge in applications and cost increase in sludge management. The problems with ensuring optimum technological qualities of stabilized and sanitized sludge with this method of self-heating aerobic thermophilic stabilization with pure oxygen are the reason why the method has not spread in water treatment industry.

### The Principle of the Invention

The above disadvantages are substantially eliminated by the method and device for complex sewage sludge treatment based on the principle, that it enables traditional aerobic stabilization by air and thickening, and self-heating aerobic thermophilic stabilization and sanitation of sludge from sewage water plants with pure oxygen to be performed in a single technological complex, with the possibility of biological degree revitalization - activating tanks in water treatment plants by seeding by means of various operation modes selectable from a control panel according to contamination at the input to a treatment plant.
The technological device for sewage sludge treatment consists of at least three tanks, one of which is perfectly insulated and is equipped with charging system enabling dosage of pure oxygen, and with a mechanical agitator, and it serves as a reactor for automatically controlled self-heating aerobic thermophilic stabilization and sanitation of sludge with pure oxygen, meeting the requirement for the highest level of hygienic security of the sludge.
The other tanks are equipped with automatically controlled aeration with air and serve as aerated sludge reservoirs and enable operation of sludge management, like traditional aerobic stabilization with sludge thickening.
All the tanks may be aerated with air, they are interconnected so as stabilized, thickened and sanitized sludge can be passed from one to another, and pumped according to the requirements of current controlling programme. Fittings, pumps and the piping system enable all the tanks to be connected in a series as well as in parallel and if there are more tanks in the system, they may be grouped and combined arbitrarily in serial or parallel connection.
The technological arrangement and controlling system enable automatically controlled performance of the following variations of technological procedures and operations.
- Aerobic stabilization and thickening of sludge.
- Self-heating aerobic thermophilic stabilization and sanitation of sludge.
- Revitalization of biological degree.

The controlling system for complete sewage sludge treatment monitors, controls and is able to register the following parameters:
- Level height and volumes of content in all the system tanks (0 - max)
- Time of the individual technological operations being performed (minutes)
- ORP - oxidation-reduction potential of the mixture in the reactor (-1000mV - +1000mV)
- pH in the reactor (1 - 13)
- Temperature in the reactor (0 - 100 °C)
- Oxygen concentration in the reactor and in specified tanks (0 - 40 mg/l inside the reactor, 0 - 15 mg/l inside the other tanks)
- Dosage and consumption of oxygen from the evaporation unit (Nm³/hour, kg/day)

The current material load of sewage water treatment plant according to contamination degree at the input in EO, according to 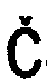 SN or in kg BOD₅ per day, with possibility of correction in % is entered into the controlling system as the input data.
One of the new advantages of performance of the process of self-heating aerobic thermophilic stabilization and sanitation of sewage sludge is based on flexible response of the controlling process system to current load of a water treatment plant.

The controlling system moreover enables all operations to be adjusted manually with a simple selection of time mode, except for the reactor in termophilic mode with pure oxygen. In emergency situations the reactor may be switched to the "suspension mode" which preserves the required hygienic qualities of the sludge until the system outage or until restart of the automatic control.

The new technological solution of the self-heating aerobic thermophilic stabilization and sanitation of sewage sludge with pure oxygen is based on the principle that the process in all the tanks and in the reactor is controlled in dependence on the plant real load according to contamination at the input by a central computer, which moreover enables additional functions in technological relation to controlled utilization of additional tanks, like traditional aerobic sludge stabilization and automatic revitalization of biologic degree of a plant.
Stability of the process of sewage sludge sanitation and stabilization, production of easily passable sludge, low operation costs of sludge management and higher operation security of a water treatment plant given by the possibility of revitalization of biological degree are the advantages of this solution.
Significant reduction of dewatered sludge production, normally by 20 - 40 weight per cent compared to normal operation without sanitation is a side effect of this method.

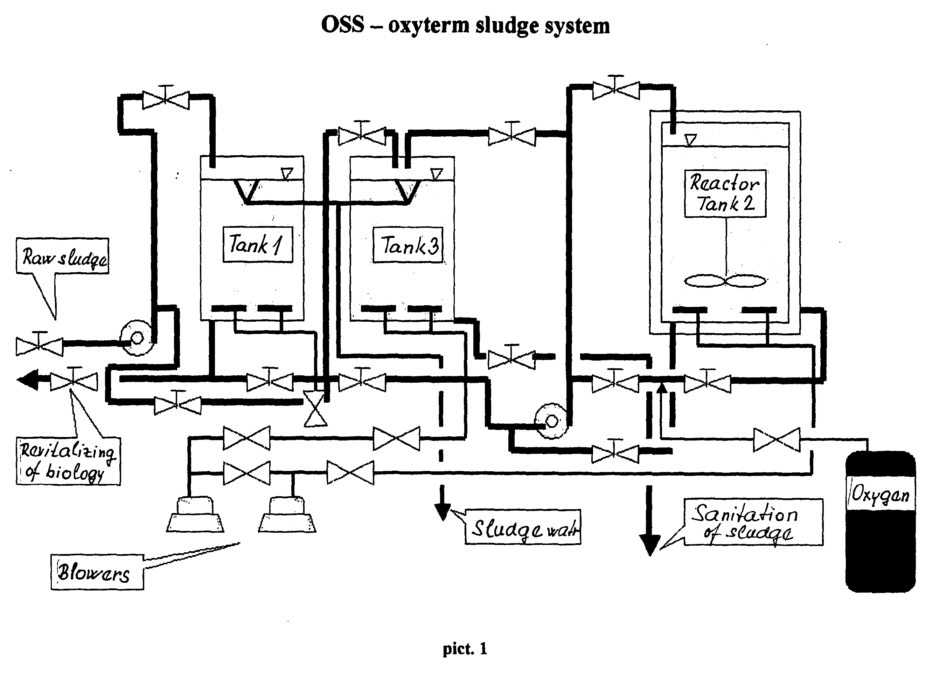

### Summary of the figures in the drawing

The device for complete sewage sludge treatment is explained in more detail in the enclosed drawing with schematic view of the system with three tanks.

### Example implementation of the invention

The device for complete sewage sludge treatment shown on the enclosed drawing consists of tank 1, which is equipped with a pneumatic agitating system, aeration and a device for sludge water draining, tank 2 - reactor with thermal insulation (all around the surface), with aeration by air, an equipment for adding oxygen with a circulation pump, and a mechanical agitating device, tank 3 with a pneumatic agitating system, aeration and a device for sludge water draining, two blowers and a pump for stabilized sludge, or the stabilized sludge might flow out spontaneously.

### The procedure of aerobic stabilization and thickening of sludge:

The excessive sludge flowing from a water treatment plant is pumped to the tank 1 either thickened or not. The optimum concentration of undissolved substances in sludge usually ranges from 0.7 to 1.5 weight per cent. The sludge is then pumped sequentially from the tank 1 to the tanks 2 and 3 being gradually thickened. Optimal oxygen concentration is maintained in all three tanks by means of automatically controlled aeration with air. The recommended oxygen concentration is between 0.5 and 2.0 mg/l, and sedimentation phase, sludge water drainage (in tanks 1 and 3) and pumping the sludge to the next tank are provided in particular intervals.

The recommended adjustment of sedimentation phase may for example be within the range of 4 - 6 hours. This programme will ensure sludge stabilization, good flow with common consumption of organic flocculant, and hygienic qualities up to present indicators in these values: enterococcus < 10⁶ CFU and thermo-tolerant coliform germs < 10⁶ CFU.

The procedure of aerobic self-heating thermophilic stabilization and sanitation of sludge

The excessive sludge is pumped to the aerated or agitated tank 1, the sludge should always be thickened at least to 2.5 weight per cent. The recommended concentration of undissolved substances ranges from 3.0 to 7.0 weight per cent. The sludge is taken continuously or semi-continuously from the tank 1 to the thermophilic aerobic reactor - tank 2 with self-heating by means of pure oxygen. The heat ensuring the operation temperature > 55°C is provided biologically by interposed oxidation and degrading of a small amount of biomass, usually 20 - 40 weight per cent of the input dry residues. The sanitized sludge detention time in the reactor - tank 2 should be longer than 10 days, determined as the mean hydraulic time of detention, recommended > 20 days. Working conditions in all the tanks, particularly in the reactor - tank 2 are controlled by an automatic system in all three main process phases, i.e. heating, adaptation of the biological system and the operation itself, upon evaluation of signals from sensors measuring values of:
- oxygen concentration
- ORP - oxidation-reduction potential
- pH values
- temperature
Apart from the above physical and physically chemical parameters the operator assigns the value of current load of the plant in BOD₅ according to EO (1 EO = 60 g BOD₅ per day), calculated from BOD₅ of the raw sewage water at the input.
After a particular delay the sanitized sludge is pumped to the tank 3, agitated by air or mechanically, where it is cooled before further treatment - drainage or removal.

In an alternative arrangement of this device with three tanks tank 1 and tank 3 are located in a single building of circular layout in a coaxial circular arrangement, where tank 3 is arranged as a larger, i.e. external annulus. Volumes of tanks 1 and 3 are optimized with regard to use of a single blower. The volume of tank 2 may advantageously equal the sum of tanks 1 and 3.
This programme will ensure perfect stabilization and sanitation of sludge, good drainage with normal flocculant consumption, and hygienic qualities according to present, stricter indicators:
enterococcus < 10 ³ CFU, and thermo-tolerant coliform germs < 10³ CFU and total liquidation of salmonella.

Significant reduction of dewatered sludge production, normally by 20 - 40 weight per cent and reduction of total costs per ton of sludge dry residue compared to normal operation without sanitation is a side effect of this method.

### Revitalization of biological degree of a water treatment plant

In the instance of a collapse or a serious breakdown of biological cleaning the programme enable automatically controlled recreation and running in of the activating tanks. If this programme is adjusted on the controlling system, parts of excessive thickened sludge is automatically pumped from tank 1 back to the activation tanks, and after a given delay implicitly determined by the programme it is automatically pumped back to tank 1. The size of a dose necessary for revitalization of biological part of a plant is determined in direct relation to the needs of the main thermophilic reactor - tank 2, the operation of which has always priority in the automatic mode. This programme, which substantially improves the operational security of biological degree is actually a technological superstructure and may be set simultaneously with any of the above programmes.

### Industrial applicability

The object of the invention may be applied anywhere where strict hygienic qualities of sludge produces by biological treatment of waste water have to be ensured before its further possible application in agriculture, reduction of total produced quantity of biological sludge from these plants and reduction of total operation costs of sludge management of mechanical-biological water treatment plants. It is applicable to sludge from municipal as well as industrial mechanical-biological water treatment plants.

## Claims

1. Method and device for complex sewage sludge treatment
**characterized by** the fact that
it consists of at least three tanks, one of which is perfectly insulated and is equipped with charging for dosage of pure oxygen, and with a mechanical agitator, the other tanks serve as aeration reservoirs equipped with aerating system.

2. Method and device for complex sewage sludge treatment of claim 1.,
**characterized by** the fact that
any tanks or groups of tanks with accessories are interconnected by piping system in series or in parallel.

3. Method and device for complex sewage sludge treatment of claims 1. a 2.,
**characterized by** the fact that
the accessories of the tanks consist of at least one pump, at least one blower, at least one evaporating unit for liquid oxygen with oxygen flow meter, at least one cylinder of liquid or pressurized oxygen, at least one system measuring concentration of dissolved oxygen, oxidation-reduction potential, pH and temperature, a gauge measuring level height in the whole tank and at least one registering and controlling computer.

4. Method and device for complex sewage sludge treatment
**characterized by** the fact that
aerobic stabilization by air and thickening and self-heating aerobic thermophilic stabilization and sanitation of sludge from sewage water plants with pure oxygen are performed in a single technological complex arranged according to the invention, with the possibility of biological degree revitalization - activating tanks in water treatment plants by seeding by selecting "revitalization" mode on the control panel simultaneously with the "aerobic stabilization and thickening" and "self-heating aerobic thermophilic stabilization and sanitation" modes.

5. Method and device for complex sewage sludge treatment of claim 4.,
**characterized by** the fact that
the value of current material load of sewage water treatment plant according to contamination degree at the input is entered into the controlling system as the input data.

6. Method and device for complex sewage sludge treatment
**characterized by** the fact that
the controlling system is equipped with a function of manual adjustment of aeration time, sludge sedimentation - thickening time, stabilized sludge pumping time, oxygen dosing time, pumping of set-off sludge water

7. Method and device for complex sewage sludge treatment
**characterized by** the fact that
In the instance of a breakdown of biological cleaning the system sets automatically controlled recreation and running in of the activating tanks, which starts automatically controlled pumping of excessive thickened sludge from tank /1/ back to the activation tanks, and after a given delay implicitly determined by the programme it is automatically pumped back to tank /1/.
